(19) Europäisches Patentamt
European Patent Office
Office européen des brevets

(11) **EP 3 392 469 B1**

(12) **EUROPEAN PATENT SPECIFICATION**

(45) Date of publication and mention
of the grant of the patent:
**05.08.2020 Bulletin 2020/32**

(51) Int Cl.:
*F01D 25/00* *(2006.01)*     *F04D 29/70* *(2006.01)*

(21) Application number: **18157693.5**

(22) Date of filing: **20.02.2018**

(54) **COMPRESSOR WATER-WASH ADVISORY**

WASSERWASCHANWEISUNG FÜR KOMPRESSOR

AVIS DE LAVAGE À L'EAU DE COMPRESSEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.04.2017 US 201715493044**

(43) Date of publication of application:
**24.10.2018 Bulletin 2018/43**

(73) Proprietor: **General Electric Company
Schenectady, NY 12345 (US)**

(72) Inventor: **ADIBHATLA, Sridhar
Cincinnati, OH Ohio 45215 (US)**

(74) Representative: **Openshaw & Co.
8 Castle Street
Farnham, Surrey GU9 7HR (GB)**

(56) References cited:
**EP-A1- 3 029 275       EP-A1- 3 051 075
EP-A2- 2 149 832       US-A1- 2006 200 325
US-A1- 2011 083 705**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The subject matter disclosed herein relates generally to jet engine maintenance, and, more particularly, to optimization of engine efficiency through water-washing of the engine compressor

BACKGROUND

The gradual accumulation of dirt or other contaminants in a jet engine's compressor over many flight hours results in a gradual restriction of air flow through the engine. This in turn leads to a loss of fuel efficiency as the engine burns increasing amounts of fuel to maintain a desired level of performance.

Engine fuel efficiency can be recovered by water-washing the compressor to remove accumulated contaminants. Water-wash operations are often performed as part of a routine maintenance schedule, typically on a time basis. For example, some aircraft owners water-wash the engine compressors once a month, or after a defined number of flights subsequent to a previous water-wash operation.

However, such time-based water-wash cycles may yield a diminished return on maintenance costs if water-wash operations are scheduled more frequently than necessary. On the other hand, infrequent water-wash operations may result in extended durations of fuel-inefficient flight time, increasing fuel costs and possibly contributing to accelerated part degradation.

The above-described deficiencies of gas turbine operations are merely intended to provide an overview of some of the problems of current technology, and are not intended to be exhaustive. Other problems with the state of the art, and corresponding benefits of some of the various non-limiting embodiments described herein, may become further apparent upon review of the following detailed description.

EP 3 051 075 A1 discloses a system which may include a memory storing a turbomachinery degradation model configured to model degradation of a turbine system over time. EP 3 029 275 A1 discloses a turbine engine fleet wash management system configured to electronically communicate with a turbine engine system, a fleet management service, and a cleaning management service. EP 2 149 832 A2 discloses an engine controller system including an engine model programmed to receive engine operating condition values from a plurality of sensors positioned on an engine, the engine model programmed to determine a plurality of engine operating parameter values.

SUMMARY

The following presents a simplified summary of the disclosed subject matter in order to provide a basic understanding of some aspects of the invention. This summary is not an extensive overview of the various aspects. It is intended neither to identify key or critical elements of the various aspects nor to delineate the scope of the various aspects. Its sole purpose is to present some concepts of the disclosure in a streamlined form as a prelude to the more detailed description that is presented later.

One or more aspects provide a method, comprising receiving, by a system comprising at least one processor, sensor data representing one or more measured engine parameters of a turbine engine; determining, by the system, one or more engine performance parameter values based on the sensor data; generating, by the system, a health index value based on a difference between the one or more engine performance parameter values and one or more expected engine performance parameter values defined in a nominal new engine model; and generating, by the system, a compressor water-wash advisory output in response to a determination that the health index value satisfies a defined criterion; wherein the health index value comprises a normalized health index value, and the generating the water-wash advisory output comprises:
monitoring an average of the normalized health index value over a time duration or across flight cycles; and generating the water-wash advisory output in response to a determination that the average of the normalized health index value exceeds a defined threshold value.

Also, in one or more aspects, a system for generating engine compressor water-wash notifications is provided, comprising a sensor data component configured to receive sensor data representing one or more engine parameter values measured from a gas turbine engine; a tracking filter component configured to determine one or more engine performance parameter values based on the one or more engine parameter values, and to determine a difference between the one or more engine performance parameter values and corresponding one or more expected engine performance parameter values defined in a nominal new engine model; and a health index analysis component configured to generate a health index value based on the difference between the one or more engine performance parameter values and the one or more expected engine performance parameter values, and to output a compressor water-wash advisory indication in response to a determination that the health index value satisfies a defined criterion; wherein the health index analysis component is further configured to:

> normalize the health index value to yield a normalized health index value,
> monitor an average of the normalized health index value over a time duration or across flight cycles to yield an average health index value, and generate the water-wash advisory in response to a determination that the average health index value exceeds a defined threshold value.

Also, according to one or more aspects, a non-transitory computer-readable medium is provided having stored thereon instructions that, in response to execution, cause a system to perform operations, the operations comprising receiving sensor data representing one or more measured engine parameters of a turbofan engine; determining one or more engine performance parameter values based on the sensor data; comparing the one or more engine performance parameter values with corresponding one or more expected engine performance parameter values defined in a nominal new engine model; generating a health index value based on a result of the comparing; and generating a compressor water-wash advisory output in response to a determination that the heath index value satisfies a defined criterion.

To the accomplishment of the foregoing and related ends, the disclosed subject matter, then, comprises one or more of the features hereinafter more fully described. The following description and the annexed drawings set forth in detail certain illustrative aspects of the subject matter. However, these aspects are indicative of but a few of the various ways in which the principles of the subject matter can be employed. Other aspects, advantages, and novel features of the disclosed subject matter will become apparent from the following detailed description when considered in conjunction with the drawings. It will also be appreciated that the detailed description may include additional or alternative aspects beyond those described in this summary.

BRIEF DESCRIPTION OF DRAWINGS

FIG. 1 is a simplified diagram of an example twin-spool jet engine.

FIG. 2 is a simplified diagram illustrating a water-wash operation performed on a jet engine.

FIG. 3 is a block diagram of an example water-wash advisory system for jet engines.

FIG. 4 is a diagram illustrating collection of sensor data from a jet engine compressor.

FIG. 5 is a diagram illustrating an overview of example data processing performed by a water-wash advisory system.

FIG. 6 illustrates example data formats for a nominal new engine model and an actual engine model.

FIG. 7 is a diagram that illustrates generation of efficiency modifiers and flow modifiers by a tracking filter component.

FIG. 8 is a diagram that illustrates generation and tracking of a health index for a jet engine by a health index analysis component based on performance modifiers generated by a tracking filter component.

FIG. 9 is a block diagram illustrating the use of a water-wash advisory system as a sub-system of an on-line compressor water-wash system.

FIG. 10 depicts a health index graph and a corresponding efficiency adder graph.

FIG. 11A is a first part of a flowchart of an example methodology for generating engine compressor water-wash advisories or control signals based on monitored heath indications of a gas turbine or turbofan engine.

FIG. 11B is a second part of a flowchart of an example methodology for generating engine compressor water-wash advisories or control signals based on monitored heath indications of a gas turbine or turbofan engine.

FIG. 12 is an example computing environment.

FIG. 13 is an example networking environment.

DETAILED DESCRIPTION

The subject disclosure is now described with reference to the drawings wherein like reference numerals are used to refer to like elements throughout. In the following description, for purposes of explanation, numerous specific details are set forth in order to provide a thorough understanding of the subject disclosure. It may be evident, however, that the subject disclosure may be practiced without these specific details. In other instances, well-known structures and devices are shown in block diagram form in order to facilitate describing the subject disclosure.

As used in the subject specification and drawings, the terms "object," "module," "interface," "component," "system," "platform," "engine," "selector," "manager," "unit," "store," "network," "generator" and the like are intended to refer to a computer-related entity or an entity related to, or that is part of, an operational machine or apparatus with a specific functionality; such entities can be either hardware, a combination of hardware and firmware, firmware, a combination of hardware and software, software, or software in execution. In addition, entities identified through the foregoing terms are herein generically referred to as "functional elements." As an example, a component can be, but is not limited to being, a process running on a processor, a processor, an object, an executable, a thread of execution, a program, and/or a computer. By way of illustration, both an application running on a server and the server can be a component. One or more components may reside within a process and/or thread of execution and a component may be localized on one computer and/or distributed between two or more computers. Also, these components can execute from various computer-readable storage media having various data structures stored thereon. The components may communicate via local and/or remote processes such as in accordance with a signal having one or more data packets (e.g., data from one component interacting with another component in a local system, distributed system, and/or across a network such as the Internet with other systems via the signal). As an example, a component can be an apparatus with specific functionality provided by mechanical parts operated by electric or electronic circuitry, which is operated by software, or firmware application executed by a processor, wherein the processor can be internal or external to the apparatus and executes at least a part of the software or firmware application. As another example, a component can be an apparatus that provides specific functionality through electronic components without mechanical parts, the electronic components can include a processor therein to execute software or firmware that confers at least in part the functionality of the electronic components. Interface(s) can include input/output (I/O) components as well as associated processor(s), application(s), or API (Application Program Interface) component(s). While examples presented hereinabove are directed to a component, the exemplified features or aspects also apply to object, module, interface, system, platform, engine, selector, manager, unit, store, network, and the like.

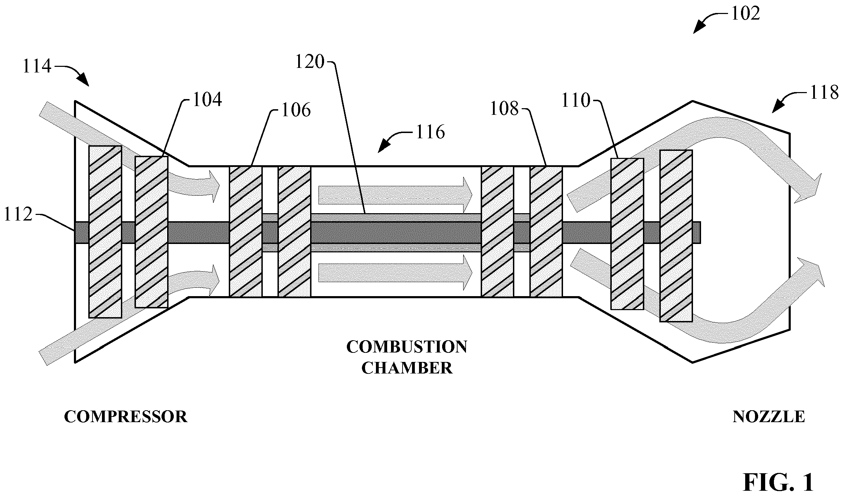

FIG. 1 is a simplified diagram of an example twin-spool jet engine 102. Jet engine 102 comprises a compressor 114 that compresses and feeds air or other gases into a combustion chamber 116, where the compressed air is ignited by fuel injected into the combustion chamber 116. The combusted gas is expanded through low-pressure turbines 110, which accelerate the gas through propulsion nozzle 118 to produce thrust.

The compressor 114 includes a set of low-pressure fans 104, which are connected to the low-pressure turbines 110 via a low-pressure shaft 112. Compressor 114 also includes a set of high-pressure fans 106 which are connected to a set of high-pressure turbines 108 near the exit of the combustion chamber 116 via a high-pressure shaft 120, also referred to as the core. The high-pressure shaft 120 and low-pressure shaft 112 are concentric, and rotate independently of one another as air flows through the engine 102. The rotational speed of the low-pressure shaft 112, referred to as the fan speed, is given by N1. This fan speed N1 is typically a function of the throttle or power level set by a pilot (in the case of aircraft). The rotational speed of high-pressure shaft 120, referred to as the core speed, is given as N2. Engine 102 is only intended to be exemplary, and it is to be appreciated that the techniques described herein are suitable for use with substantially any type of gas turbine engine or turbofan engine.

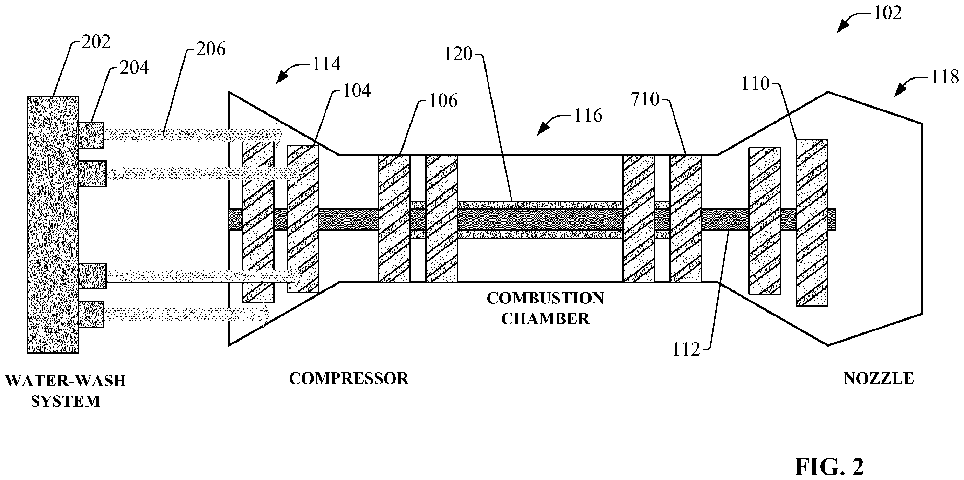

Accumulation of dirt or other pollutants in the compressor 114 during engine operation can restrict air flow through the engine 102 or reduce the efficiency of the compressor 114, resulting in a gradual reduction in fuel efficiency as more fuel is required to maintain a desired level of turbine performance. To maintain fuel efficiency, jet engine compressors are typically subjected to a water-wash operation as part of a regular maintenance schedule. The water-wash operation removes dirt deposits from the compressor 114 and regains fuel efficiency. FIG. 2 is a simplified diagram illustrating a water-wash operation performed on jet engine 102. In this example, a water-wash system 202 comprises a set of water injection nozzles 204 that inject streams of water or a cleaning solution 206 into the inlet of compressor 114, thereby removing accumulated contaminants from the compressor 114 and restoring performance levels. A water-wash operation can be carried out as an off-line process whereby the water-wash is applied while the jet engine is not operating (e.g., as a ground-based operation). In such scenarios, the water-wash system 202 may be a separate machine that can be directed to the inlet of the compressor 114 while the jet engine 102 is grounded. Alternatively, a water-wash operation may be carried out as an on-line (on-wing) process whereby an integrated water-wash injection system is directed to the inlet of the compressor 114 during operation of the jet engine 102.

Typically, water-wash operations are carried out as part of a routine maintenance schedule on a time basis. For example, maintenance personnel may schedule water-wash operations to be performed after a defined number of flights subsequent to a previous water-wash, or after a defined number of days subsequent to the previous water-wash. However, time-based water-wash scheduling does not consider the actual state of the compressor 114, and therefore may result in water-wash operations that are performed too infrequently or too frequently. Insufficiently frequent water-washing allows contaminants to accumulate to an excessive level within the compressor 114, causing the jet engine 102 to continue operating for longer durations at a gradually reduced fuel efficiency, resulting in excessive fuel burn over time. On the other hand, excessively frequent water-washing - whereby water-wash operations are performed even if only small amounts of contaminants have accumulated in the compressor 114 since the previous water-wash - can result in unnecessarily high maintenance costs associated with needless water-wash operations.

To address these and other issues, one or more embodiments of the present disclosure provide a water-wash advisory system that alerts a user or a water-wash control system of suitable times at which to perform a water-wash operation on a gas turbine jet engine based on monitored health parameters of the engine. In one or more embodiments, a high-fidelity model of engine compressor performance is stored in memory associated with an on-board water-wash advisory system. The model can represent nominal expected values of engine parameters such as compressor efficiency and flow as a function of core speed, operating mode (e.g., take-off, climbing, high-altitude cruising), or other such conditions. A tracking filter component compares the modeled parameters with actual calculated parameters obtained based on sensor data collected from the engine during operation, and maintains a separate actual model of engine performance that modifies the nominal engine parameter values using parameter modifiers (e.g., efficiency and flow modifiers) to match the calculated parameter values obtained via measurement. The parameter modifiers are used to derive health indicators for the engine, which are indicative of performance loss due to contaminant accumulation within the compressor. When the health indicators satisfy a defined criterion (e.g., when the health indicators exceed a defined threshold representing a level of contaminant accumulation that merits a water-wash operation), the system generates an alert notifying that a water-wash operation should be performed on the engine.

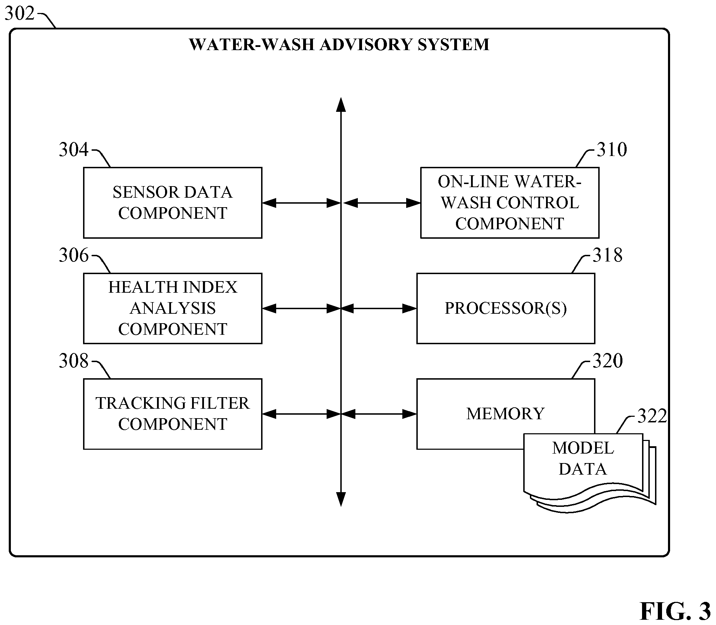

FIG. 3 is a block diagram of an example water-wash advisory system for jet engines according to one or more embodiments of this disclosure. Aspects of the systems, apparatuses, or processes explained in this disclosure can constitute machine-executable components embodied within machine(s), e.g., embodied in one or more computer-readable mediums (or media) associated with one or more machines. Such components, when executed by one or more machines, e.g., computer(s), computing device(s), automation device(s), virtual machine(s), etc., can cause the machine(s) to perform the operations described.

Water-wash advisory system 302 can include a sensor data component 304, a health index analysis component 306, a tracking filter component 308, an on-line water-wash control component 310, one or more processors 318, and memory 320. In various embodiments, one or more of the sensor data component 304, health index analysis component 306, tracking filter component 308, on-line water-wash control component 310, the one or more processors 318, and memory 320 can be electrically and/or communicatively coupled to one another to perform one or more of the functions of the water-wash advisory system 302. In some embodiments, one or more of components 304, 306, 308, and 310 can comprise software instructions stored on memory 320 and executed by processor(s) 318. Water-wash advisory system 302 may also interact with other hardware and/or software components not depicted in FIG. 3. For example, processor(s) 318 may interact with one or more external user interface devices, such as a keyboard, a mouse, a display monitor, a touchscreen, or other such interface devices. In one or more embodiments, water-wash advisory system 302 can be an integrated subsystem of an aircraft's electronic engine control (EEC) that controls water-wash operations on a substantially real-time basis. In other embodiments, water-wash advisory system 302 may be a ground-based system that downloads or otherwise receives engine operating data and generates water-wash advisories based on analysis of the operating data.

Sensor data component 304 can be configured to receive and process sensor data representing measured operating parameters of a jet engine. Engine operating parameter that can be represented by the sensor data can include, but are not limited to, engine inlet temperature, engine inlet pressure, fan rotational speed, compressor inlet pressure, compressor inlet temperature, compressor exit pressure, compressor exit temperature, core rotational speed, exhaust gas temperature, exhaust gas pressure, inter-turbine temperature, fuel flow, or other such measured parameters.

Health index analysis component 306 can be configured to calculate one or more engine parameters based on the measured data received from sensor data component 304, and generate one or more health index values for the jet engine based on a comparison of the calculated engine parameters and expected values of the engine parameters defined in a nominal new engine model stored in memory 320 as part of model data 322.

The tracking filter component 308 can be configured to compare the calculated engine parameter values obtained via the sensor data with corresponding expected engine parameter values defined by the nominal new engine model, and to generate one or more engine performance modifiers that adjust the corresponding expected engine parameter values defined in an actual engine model (also stored in memory 320 as part of model data 322) to match the calculated (sensed) values of the engine parameters. As will be described in more detail below, these performance modifiers are used by the health index analysis component 306 to generate the health indicators used to determine when the engine's compressor should be washed.

The on-line water-wash control component 3210 can be configured to initiate an on-line water-wash cycle for the engine compressor in response to a notification from the health index analysis component 306 for embodiments that support on-line water-wash control.

The one or more processors 318 can perform one or more of the functions described herein with reference to the systems and/or methods disclosed. Memory 320 can be a computer-readable storage medium storing computer-executable instructions and/or information for performing the functions described herein with reference to the systems and/or methods disclosed.

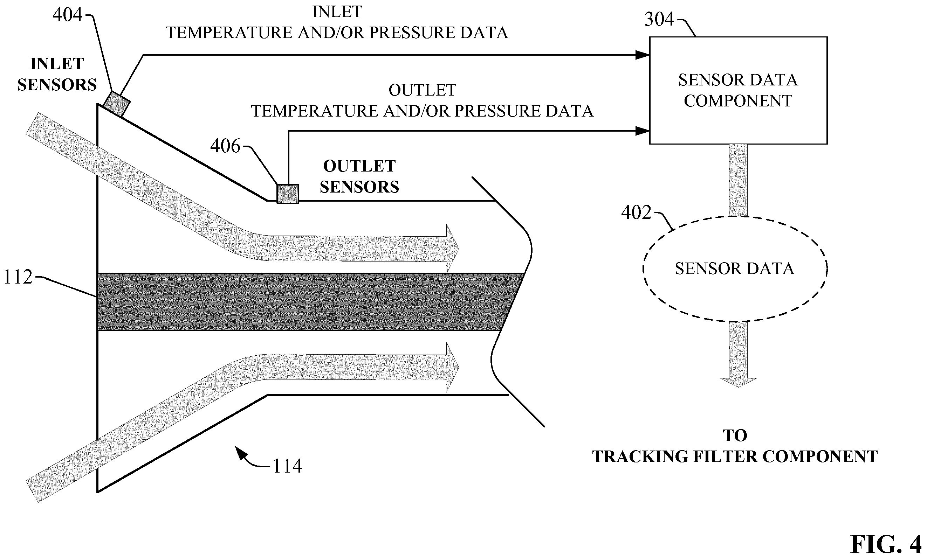

FIG. 4 is a diagram illustrating collection of sensor data from a jet engine compressor 114. Although the techniques described herein for identifying suitable times at which to perform a water-wash operation can leverage substantially any sensed engine operating parameters in connection with monitoring the overall health of the engine, specific examples described herein determine engine health using compressor pressure ratios and temperature ratios. Accordingly, as shown in FIG. 4, one or more compressor inlet sensors 404 and one or more compressor outlet sensors 406, are installed in compressor 114 and provide measured temperature and pressure data to sensor data component 304. Specifically, inlet sensors 404 measure the temperature and pressure at the compressor's inlet, while outlet sensors 406 measure the temperature and pressure at the compressor's outlet or exit. The measured values can be provided to sensor data component 304 as any suitable sensor output signal (e.g., a digital value, an analog 4-20mA signal, a 0-10VDC signal, etc.). For retro-fit installations of water-wash advisory system 302, the system can leverage existing engine sensors that may already be installed in the engine, and calculate a health index for the engine based on available operating data measured by the sensors.

The inlet and outlet temperatures and pressures will typically be measured during operation of the jet engine; e.g., during take-off, climbing, and cruising of the associated aircraft. Sensor data component 304 collects this sensor information, performs any necessary pre-processing of the data (e.g., filtering, value conversion or correction, etc.) and provides the resulting sensor data 402 to the health index analysis component 306 for analysis of engine health.

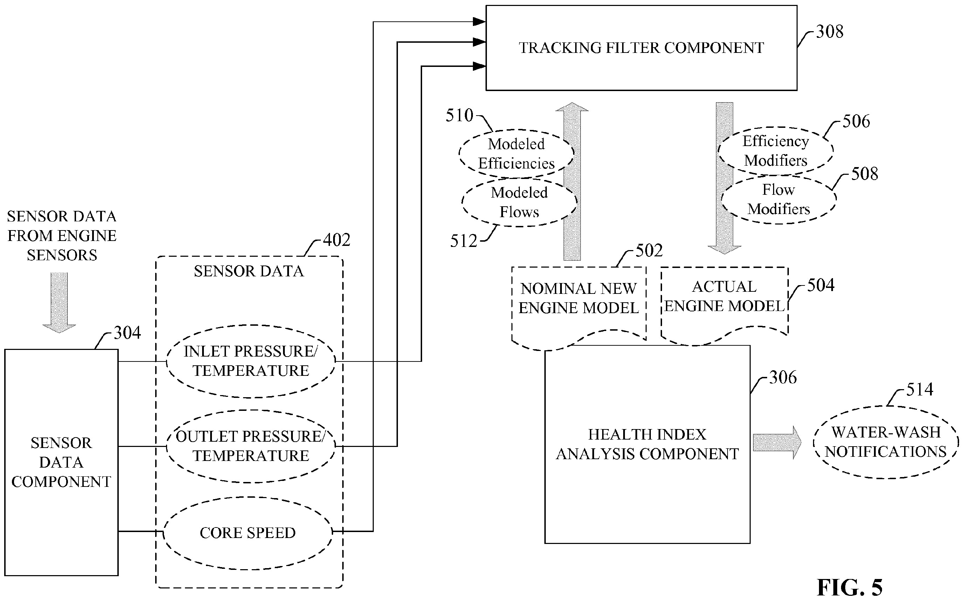

FIG. 5 is a diagram illustrating an overview of example data processing performed by the water-wash advisory system 302. Sensor data component 304 provides values of measured engine operating parameters obtained from sensors 404 and 406 to health index analysis component 306. In the present example, the measured operating parameters include the inlet pressure and temperature and the outlet pressure and temperature, from which the health index analysis component 306 can calculate the compressor pressure ratio and temperature ratio. Sensor data component 304 also provides the current core rotational speed - the rotational speed of high-pressure shaft 120 as well as the value of the power setting parameter (fan speed or engine pressure ratio, which is the ratio of exhaust gas pressure to engine inlet pressure) - to the health index analysis component 306.

In general, health index analysis component 306 determines an overall health index for the engine based on calculated deviations between a nominal new engine model 502 and an actual engine model 504 derived based on the sensed engine data. Nominal new engine model 502 and actual engine model 504 can be stored in memory 320 as model data 322. Nominal new engine model 502 defines expected engine performance values under a range of engine operating conditions. The engine performance data encoded in nominal new engine model 502 is indicative of the expected average performance of a new engine corresponding to the engine's type (e.g., the engine's model number and vendor), and is typically derived based on testing and measurement performed by the engine manufacturer. In an example scenario, for a given type of engine, the same nominal new engine model 502 may be stored as an on-board reference model on all new aircraft that include jet engines of the given type.

Since nominal new engine model 502 represents average expected performance of an engine corresponding to a given engine type, it is likely that an actual engine of that type will not perform exactly as indicated by the nominal new engine model 502. A number of factors may account for differences between nominal modeled performance and actual performance of a specific individual engine. For example, due to engineering tolerances, any two engines corresponding to a particular engine type or model may not perform identically even though both engines share the same design. Consequently, the nominal new engine model 502 may not account for small tolerance variations between engines of the same type. Moreover, sensor biases may be present in the sensor data 402, which may produce small distortions in the measured engine parameter values. These sensor biases may cause further misalignment between the measured performance values and the modeled expected parameters encoded in the nominal new engine model 502.

Some sources of error between the expected engine performance encoded in nominal new engine model 502 and actual engine performance are time variant. Such time variant sources of error include the degradation of engine parts over time, as well as the accumulation of contaminants in the compressor between water-washes. Except in cases of engine part damage, the accumulation of contaminants will typically represent a larger component of the error when the error exceeds a certain level.

To correct for these engine-specific and condition-specific inaccuracies in nominal new engine model 502, the water-wash advisory system 302 maintains an actual engine model 504, which is a modified version of nominal new engine model 502 that reflects actual measured performance of the engine, as determined based the sensor data 402. To this end, a tracking filter component 308 is configured to receive sensor data 402 from sensor data component 304, calculate actual measured values of the compressor performance parameters (e.g., compressor efficiency and air flow in the current example) based on the sensor data 402, and compare these measured or sensed engine performance parameters with the corresponding modeled parameters - e.g., modeled efficiencies 510 and modeled flows 512 - defined in nominal new engine model 502. If the measured or sensed engine performance parameter values are different than the modeled performance parameter values, tracking filter component 308 generates performance parameter modifiers - e.g., efficiency modifiers 506 and flow modifiers 508 - that correct the modeled performance parameter values by bringing the expected parameter values in line with the measured parameter values. These modifiers are applied to the modeled parameter values defined in nominal new engine model 502 to yield actual engine model 504.

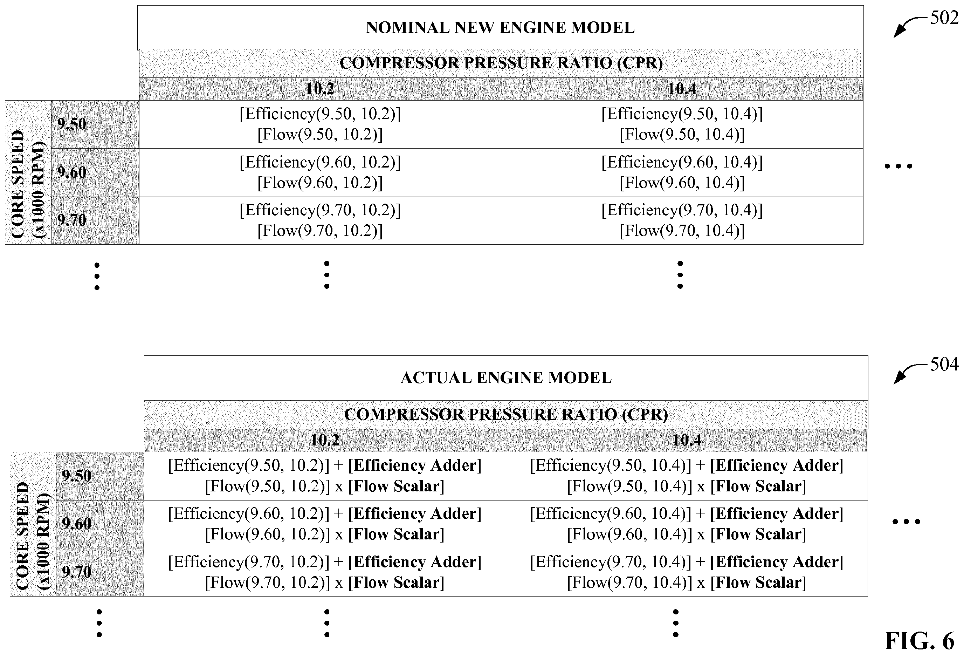

FIG. 6 illustrates example, non-limiting data formats for nominal new engine model 502 and actual engine model 504. In the illustrated example, nominal new engine model 502 maps expected values of compressor efficiency ([Efficiency(x, y)]) and air flow ([(Flow(x, y)]) for ranges of values of core speed (x) and compressor pressure ratio (CPR) (y). For example, for a given type of engine under an operating condition whereby the compressor pressure ratio (the ratio between the compressor's outlet pressure and inlet pressure) is 10.2 and the core speed of the engine is 9500 RPM, there is an expected compressor efficiency value (represented in FIG. 6 as [Efficiency(9.50, 10.2)], where [Efficiency(x, y)] is a value of the efficiency as a function of core speed x and CPR y), and an expected air flow value (represented in FIG. 6 as [Flow(9.50, 10.2)], wherein [Flow(x, y)] is the flow as a function of core speed x and CPR y). Nominal new engine model 502 maps these compressor efficiency and flow values for a range of combinations of compressor pressure ratio and core speed, so that expected efficiencies and flows are recorded for a range of operating conditions (for clarity, FIG. 6 only depicts a portion of an example model 502 comprising six performance parameter fields corresponding to two compressor pressure ratio values and three core speeds values).

Although FIG. 6 depicts nominal new engine model 502 as being a function of pressure ratio, it is to be appreciated that model 502 may be defined as a function of other engine operating parameters, including but not limited to temperature ratio (the ratio between the temperature at the compressor outlet and the temperature at the compressor inlet), or other sensed engine parameters. Moreover, some embodiments may model other performance parameters in addition to or as an alternative to compressor efficiency and air flow. In general, the health index tracking and water-wash notification techniques described herein are not dependent on the specific engine operating parameters that are measured or the performance parameters that are modeled.

As noted above, since the performance parameter values (efficiencies and flows) modeled by nominal new engine model 502 may not exactly align with measured performance values due to model inaccuracies, manufacturing tolerances, sensor biases, engine part degradation, or contaminant accumulation. Accordingly, the tracking filter component 308 maintains an actual engine model 504 in which the modeled values of the compressor efficiency and flow under various conditions are modified to match the sensed performance values. As shown in FIG. 6, in the case of compressor efficiency, this is achieved in the present example by calculating an efficiency adder that, when added to the original modeled efficiency value, yields the measured performance parameter. Similarly, for the air flow, a flow scalar value is calculated that, when multiplied by the original modeled flow value, yields the measured air flow. In this way, the tracking filter component 308 forces the performance values defined in actual engine model to align with measured performance of the engine.

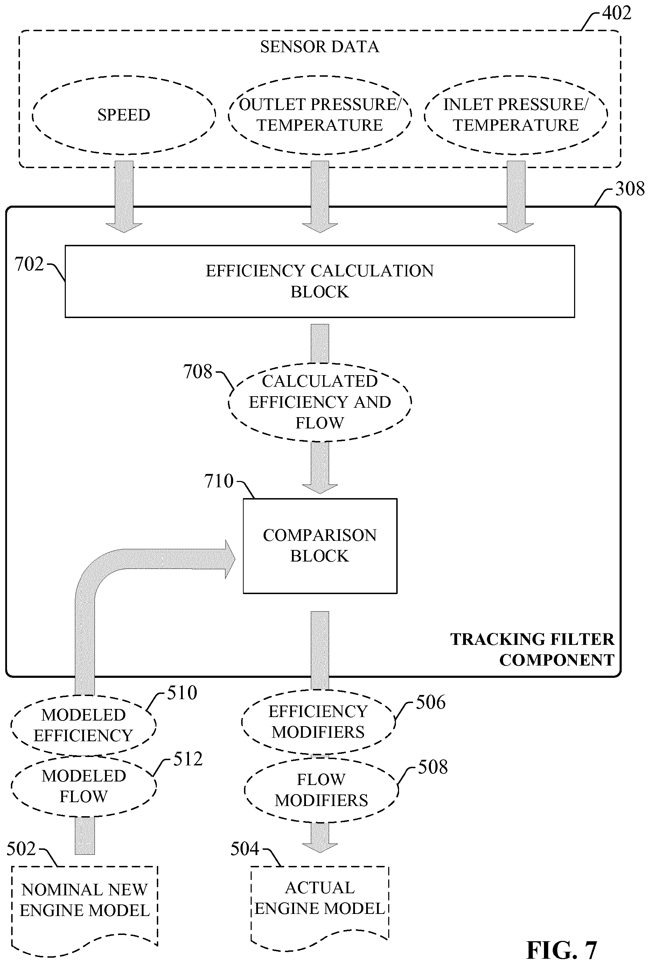

FIG. 7 is a diagram that illustrates generation of efficiency modifiers 506 and flow modifiers 508 by the tracking filter component 308. Sensor data 402 - which in the present example includes the current core rotational speed, compressor outlet pressure and temperature, and compressor inlet pressure and temperature - is provided to tracking filter component 308. The sensor data 402 is collected substantially in real time by on-board sensors (e.g., sensors 404 and 406) during operation of the jet engine (e.g., during idling, take-off, climbing, and/or cruising of the aircraft). An efficiency calculation block 702 of tracking filter component 308 calculates presumed actual compressor efficiency and air flow based on the sensor data 402. For example, the compressor efficiency and air flow can be calculated by the efficiency calculation block 702 based on the compressor pressure ratio (the ratio of the measured output pressure to the measured input pressure) and the temperature ratio (the ratio of the measured output temperature to the measured input temperature). Although the present example calculates compressor efficiencies and air flows as the engine performance indicators to be examined, it is to be appreciated that other performance indicators can be determined and used as the basis for health index tracking without departing from the scope of one or more embodiments of this disclosure.

A comparison block 710 of tracking filter component 308 next compares the calculated efficiency and flow 708 to the modeled efficiency 510 and modeled flow 512, respectively, corresponding to the current measured core speed as defined in nominal new engine model 502. If the calculated efficiency obtained based on the sensor data 402 is different than the modeled expected efficiency 510 encoded in nominal new engine model 502, the comparison block 710 calculates an efficiency modifier 506 (e.g., an efficiency adder) that, when added to the modeled efficiency 510, forces the modeled efficiency value to be equal or substantially equal to the calculated efficiency value. Similarly, if the calculated air flow obtained based on the sensor data 402 is different than the modeled flow 512, the comparison block 710 calculates a flow modifier 508 (e.g., a flow scalar) that, when multiplied with the modeled flow 512, forces the modeled flow value to be equal or substantially equal to the calculated flow value. This process for calculating the performance modifiers (e.g., efficiency adders 506 and flow scalers 508) can be executed by the water-wash advisory system 302 periodically (e.g., once per day, once per hour, etc.) or substantially continuously, such that the performance modifiers are regularly updated over the course of engine operation.

It should be understood that although this description emphasizes the calculation of compressor efficiency and flow modifiers alone, one or more embodiments may perform simultaneous estimation of efficiency and flow modifiers of several components using the available sensors. For example, a six-input, six-output tracking filter may estimate six modifiers using six sensors, two of the modifiers being compressor efficiency modifier and compressor flow modifier.

As can be seen in the example actual engine model 504 in FIG. 6, each performance parameter value defined in the actual engine model 504 has been modified by its calculated modifier (an efficiency adder in the case of compressor efficiencies, and a flow scalar in the case of air flows). In this way, tracking filter component 308 corrects for errors in the nominal new engine model 502 by regularly updating the efficiency and flow modifiers in the actual engine model 504. In some systems, this corrected actual engine model 504 can be used in connection with on-board automatic engine control systems (e.g., Full Authority Digital Electronic Control, or FADEC, systems) to predict and/or regulate behavior of one or more of the engine's systems, sub-systems, or components.

A small component of the respective engine performance modifiers is assumed to be a corrective factor corresponding to sensor biases, which are relatively time-invariant. Another component of the performance modifiers is assumed to be a corrective factor that accounts for manufacturing tolerances that cause the actual engine performance characteristics to deviate slightly from the average new engine values represented by the nominal new engine model 502. These factors are not necessarily indicative of the health of the engine, and remain relatively unchanged over time.

The performance modifier values are also influenced by other time-varying factors that are indicative of the engine's health. These factors include gradual degradation of engine components and accumulation of dirt or other contaminants in the compressor 114. Of these factors, accumulation of contaminants in the compressor 114 is assumed to cause the most rapid change to the performance modifiers over time. For example, as dirt accumulates in the compressor 114 over several flights, compressor efficiency and air flow as a function of core speed are gradually reduced. As a result, the tracking filter component 308 will calculate gradually larger performance modifiers (e.g., efficiency adders and flow scalars) over time in order to bring the actual engine model 504 into alignment with the sensed engine performance. Since the performance modifiers generated by the tracking filter component 308 vary as a function of contaminant accumulation, the water-wash advisory system 302 generates and tracks a health index value based on the magnitude of the performance modifiers, and generates a water-wash advisory in response to determining that this health index value satisfies a defined criterion (e.g., exceeds a defined health index threshold) indicative of excessive dirt accumulation in the compressor 114.

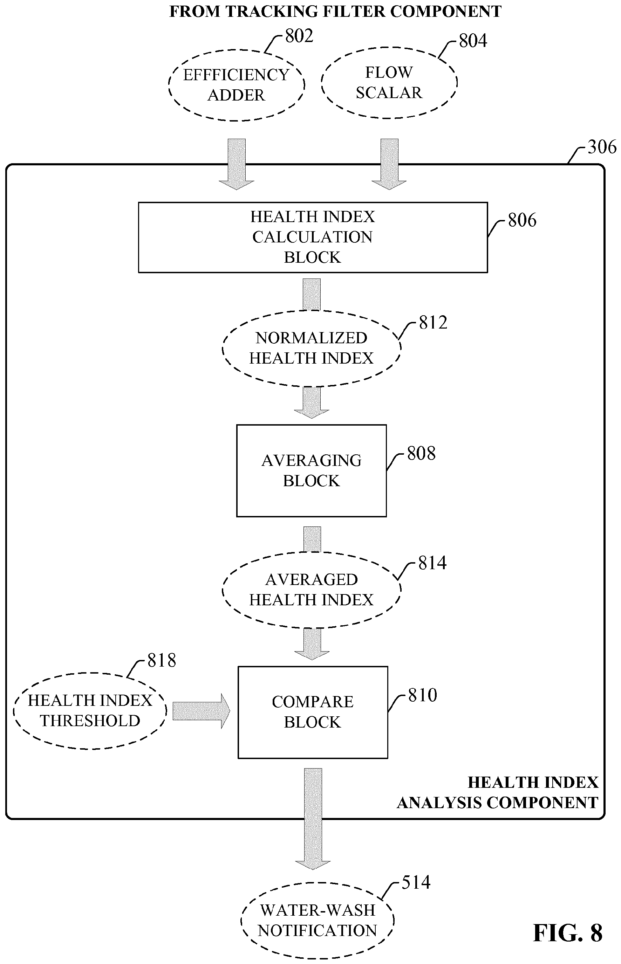

FIG. 8 is a diagram that illustrates generation and tracking of a health index for a jet engine by the health index analysis component 306 based on performance modifiers generated by the tracking filter component 308. Continuing from the present example in which compressor efficiency and air flow are monitored as the engine performance indicators, the health index analysis component 306 receives current values of the efficiency adder 802 and flow scalar 804 from tracking filter component 308. Efficiency adder 802 and flow scalar 804 represent the values of the efficiency and flow modifiers most recently generated for actual engine model 504 by tracking filter component 308. Based on these most recent performance modifier values, a health index calculation block 806 of the health index analysis component 306 generates a normalized health index value 812. The health index calculation block 806 can be configured to execute any suitable algorithm to generate the normalized health index value 812 as a function of the one or more performance modifiers (e.g., two performance modifiers in the present example). The health index value can be given generally as:

$$Health\ Index = f_{index}(modifier_1, modifier_2, \dots modifier_n) \qquad (1)$$

Where $f_{index}(.)$ is a health index function, $modifier_n$ is an $n^{th}$ performance modifier, and $n$ is an integer representing the number of different engine performance modifiers that are tracked and modified by tracking filter component (in the present example, $n = 2$, where $modifier_1$ is the efficiency adder and $modifier_2$ is the flow scalar). In some embodiments, $f_{index}(.)$ may be a root sum square of the performance modifier values. However, other mathematical techniques for generating a composite health index for the engine as a function of the performance modifier values are also within the scope of one or more embodiments of this disclosure. The health index obtained using equation (1) is then normalized to be a value between 0 and 1 to obtain the normalized health index value 812.

An averaging block 808 averages this normalized health index value 812 over a defined time horizon or over a defined number of cycles to yield an averaged health index value 814. For example, for time-based averaging the averaging block 808 may average the normalized health index values 812 generated over the most recent 12-hour period, the most recent one day period, etc. In the case of cycle-based averaging, the averaging block 808 may average the last $m$ normalized health index values 812, where $m$ is an integer defining the desired number of most recently calculated health index values over which to average the normalized health index 812. Basing the water-wash notification on the averaged health index value 814 rather than the current normalized health index value 812 can prevent water-wash notifications from being triggered in response to momentary drops in efficiency or performance due to unexpected events (e.g., bird strikes in the engine).

A compare block 810 compares the averaged health index value 814 with a health index threshold value 818. The health index threshold value 818 represents a value of the averaged health index value 814 indicative of a level of dirt accumulation in the compressor 114 that merits a water-wash operation. Although a small component of the averaged health index value 814 is assumed to reflect engine part degradation, sensor bias, and manufacturing tolerance, the majority of the averaged health index value 814 - when at the level of the health index threshold value 818 - is assumed to be contributable to contaminant accumulation in the compressor 114. The health index threshold value 818 can be a value selected as representative of a smallest level of dirt accumulation at which a sufficient amount of engine performance can be regained by water-washing the compressor 114 to justify the added maintenance costs associated with the water-wash operation.

In some cases, the averaged health index value 814 may be a negative value if the performance modifiers (e.g., the efficiency adder 802 or flow scalar 804) are negative corrective modifiers. Accordingly, the compare block 810 compares the magnitude or absolute value of the average health index 814 with the health index threshold value 818 in order to determine when a water-wash advisory is to be issued.

If the compare block 810 determines that the averaged health index value 814 exceeds the health index threshold 818, the health index analysis component 306 generates a water-wash notification 514 recommending that the compressor 114 should be water-washed. In some embodiments, the water-wash notification 514 may be strictly an advisory output. In such embodiments, the health index analysis component 306 may render the water-wash notification 514 as a message directed to a display indicator or monitor on-board the air craft, or as a transmitted message directed to one or more remote client devices associated with authorized maintenance personnel (e.g., a mobile phone, a laptop computer, a desktop computer, a tablet computer, etc.). In other example scenarios, the water-wash notification, as well as the historical trend of the averaged health index value 814, may be stored on local storage associated with the water-wash advisory system 302 (e.g., on memory 320), and this data can be downloaded as a post-flight report by maintenance personnel using a suitable client device while the aircraft is grounded. The user will then be notified of the water-wash notification 816 upon review of the downloaded data.

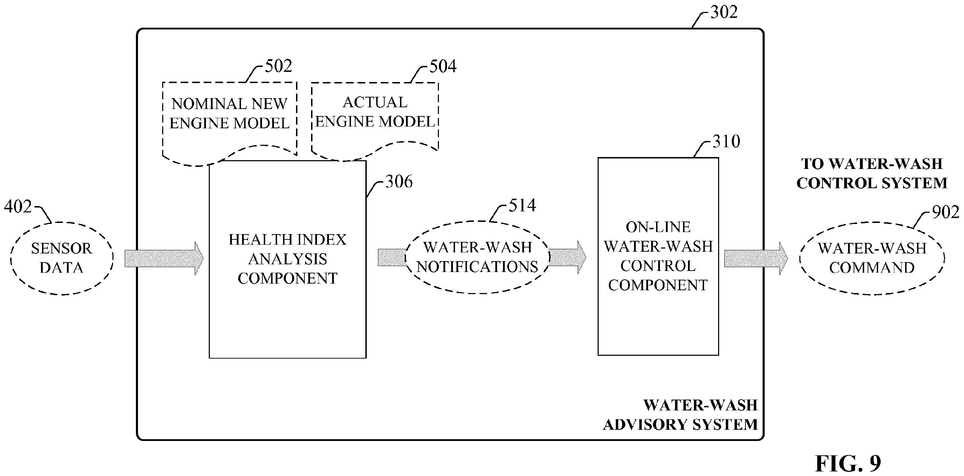

In other embodiments, the water-wash advisory system 302 can be an integrated component of an on-line water-wash system that can perform water-wash operations on the compressor 114 while the engine is operating (e.g., during flight). FIG. 9 is a block diagram illustrating the use of water-wash advisory system 302 as a sub-system of an on-line water-wash system. In this example, water-wash notifications 514 generated by health index analysis component 306 are sent to on-line water-wash control component 310, which is configured to send water-wash commands 902 to an on-line water-wash control system of the aircraft. On-line water-wash control component 310 is configured to generate water-wash commands 902 in response to receipt of a water-wash notification 514 from health index analysis component 306, and the water-wash command 902 causes the on-line water-wash system to initiate an on-line water-wash operation.

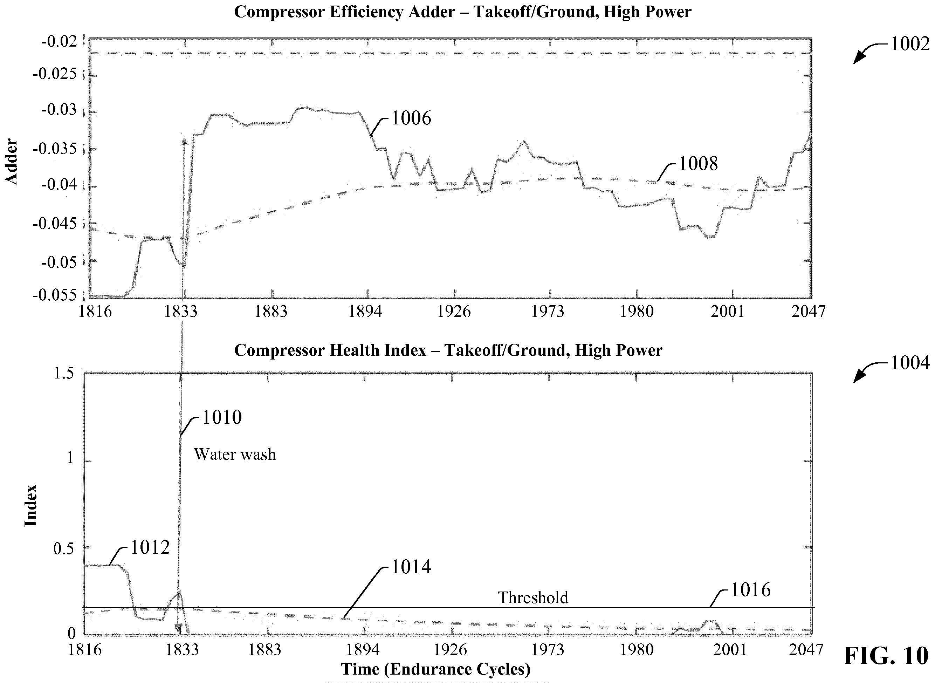

FIG. 10 depicts a health index graph 1004 and a corresponding efficiency adder graph 1002. Line 1012 of health index graph 1004 plots the normalized health index value (e.g., normalized health index value 812) over time, as measured as a number endurance cycles. Line 1014 of health index graph 1004 plots the averaged health index (e.g., averaged health index value 814) over time. In the present example, the health index is a function of the efficiency adder and flow scalar calculated by the tracking filter component 308, as described above. For example, the health index value may be a root sum square of the efficiency adder and flow scalar.

Although the health index value is a function of both the efficiency adder and the flow scalar in this example, FIG. 10 only plots the efficiency adder component of the health index for clarity. Line 1006 of efficiency adder graph 1002 plots the efficiency adder over time, and line 1008 of efficiency adder graph 1002 plots the average of the efficiency adder over time (e.g., a time-based or cycle-based average).

Horizontal line 1016 represents the health index threshold value 818. When the average health index value represented by line 1014 becomes equal to or greater than this threshold, water-wash advisory system generates a water-wash advisory (either a notification for display on a user's client device, a stored indication to be downloaded and viewed as part of a post-flight report, or a command to initiate an on-line water-wash operation). At time cycle 1833 (marked by vertical line 1010), a water-wash is performed on the compressor 114. As shown by the graphs, the magnitude of the efficiency adder represented by line 1006 rapidly decreases (moves closer to zero) immediately after the water-wash operation. Correspondingly, the health index value represented by line 1012 also drops to nearly zero, while the average health index value represented by line 1014 begins dropping more gradually. These metrics represent a sudden increase in compressor efficiency and overall engine health immediately after application of a water-wash.

Although examples described herein calculate the health index for a jet engine based on compressor efficiency and air flow, it is to be understood that embodiments of the water-wash advisory system 302 are not limited to these engine performance indicators. Rather, some embodiments of the water-wash advisory system may model and track other indicators of engine performance in addition to or as an alternative to compressor efficiency and air flow in connection with determining the health index for the engine. In such embodiments, nominal new engine model 502 and actual engine model 504 can model these other engine performance indicators as a function of core speed, pressure ratio, temperature ratio, or other sensed engine operating parameters. As in the examples described above, the tracking filter component 308 can calculate actual values of these engine performance indicators based on measured sensor data collected for the engine, and calculate performance indicator modifier values that force the modeled values of the performance indicators maintained in nominal new engine model 502 to match the measured performance indicator values. These performance indicator modifiers are then used by the health index analysis component 306 to calculate and track a normalized health index value, which is used to determine whether a water-wash should be performed on the compressor, as discussed above.

Some embodiments of water-wash advisory system 302 can generate a post-flight report that can be stored on memory 320 and downloaded or otherwise delivered to a user's client device (e.g., laptop computer, tablet computer, mobile phone, desktop computer etc.). The post-flight report can include an advisory message recommending a water-wash (if merited by the health index), and may also include additional information that can be viewed and analyzed by the user. For example, the post-flight report may include graphical trends of the normalized health index, the average health index, the one or more performance modifiers (e.g., efficiency adders, flow scalars, etc.), or other such information. In some embodiments, these graphical trends can generally conform to the formats shown in FIG. 10.

Embodiments of the water-wash system described herein implement a condition-based, rather than a time-based, water-washing schedule for jet engine compressors whereby water-wash operations are performed or advised only when merited by current engine performance conditions. This technique can reduce maintenance costs by eliminating unnecessary water-wash cycles, while also ensuring efficient engine performance by initiating or advising water-wash cycles before dirt accumulation in the compressor is allowed to curtail engine performance to an excessive degree. The water-wash advisory system 302 can be implemented as part of an on-line water-washing system, whereby the advisory system automatically initiates water-wash cycles during operation when merited by the calculated engine health index. The system 302 can also be used in an advisory mode whereby the system generates water-wash advisory messages as part of a post-flight summary report.

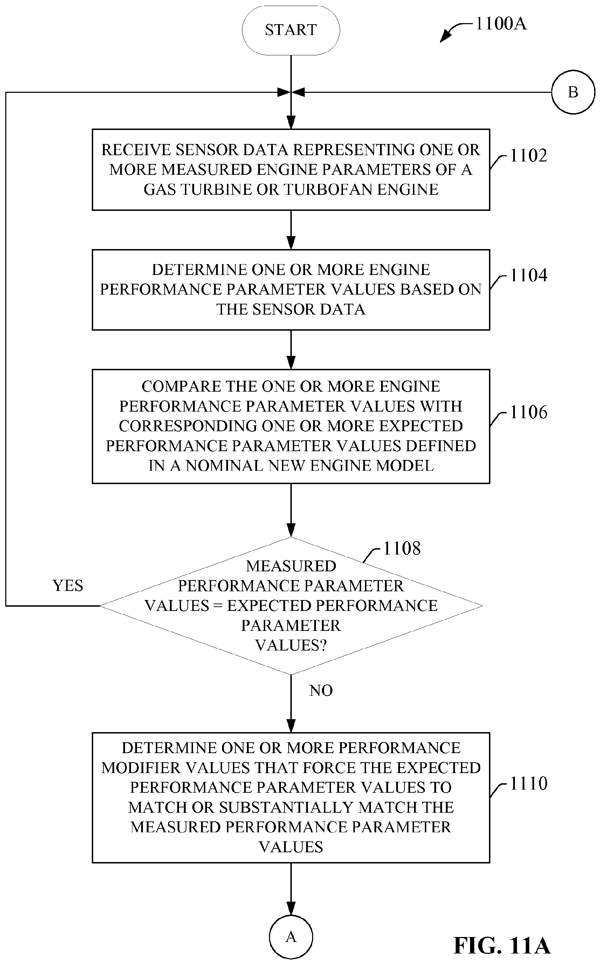

FIGs. 11A-11B illustrate a methodology in accordance with one or more embodiments of the subject application. While, for purposes of simplicity of explanation, the methodology shown herein is shown and described as a series of acts, it is to be understood and appreciated that the subject innovation is not limited by the order of acts, as some acts may, in accordance therewith, occur in a different order and/or concurrently with other acts from that shown and described herein. For example, those skilled in the art will understand and appreciate that a methodology could alternatively be represented as a series of interrelated states or events, such as in a state diagram. Moreover, not all illustrated acts may be required to implement a methodology in accordance with the innovation. Furthermore, interaction diagram(s) may represent methodologies, or methods, in accordance with the subject disclosure when disparate entities enact disparate portions of the methodologies. Further yet, two or more of the disclosed example methods can be implemented in combination with each other, to accomplish one or more features or advantages described herein.

FIG. 11A is a first part of an example methodology 1100A for generating engine compressor water-wash advisories or control signals based on monitored heath indications of a gas turbine or turbofan engine. Initially, at 1102, sensor data representing one or more measured engine operating parameters of a gas turbine or turbofan engine is received. The sensor data can include measured data representing one or more of a compressor inlet pressure, a compressor outlet pressure, a compressor inlet temperature, a compressor outlet temperature, a core speed of the engine, or other such measured engine parameters.

At 1104, one or more engine performance parameter values are determined based on the sensor data received at step 1102. For example, based on measured compressor inlet and outlet temperatures and pressures conveyed by the sensor data, a compressor efficiency and/or air flow can be calculated. Other engine performance parameters may also be calculated in addition or as an alternative to efficiency and air flow.

At 1106, the one or more engine performance parameters calculated at step 1106 can be compared with corresponding one or more expected performance parameter values defined in a nominal new engine model. The nominal new engine model can define expected values of the one or more engine performance values for a range of operating conditions indicated by the sensor data. For example, the nominal new engine model may define expected performance values (e.g., efficiency, flow, etc.) as a function of engine core rotational speed and compressor pressure ratio. Accordingly, the one or more engine performance parameter values obtained at step 1104 can be compared with the expected performance parameter values corresponding to the current core speed and compressor pressure ratio as determined by the sensor data obtained at step 1102. This scenario is only intended to be exemplary, and it is to be appreciated that the nominal new engine model can define expected engine performance parameters as a function of other operating parameters (e.g., temperature ratios, etc.) without departing from the scope of one or more embodiments of this disclosure.

At 1108, a determination is made as to whether the measured engine performance parameter values determined at step 1104 are equal to the expected performance parameter values defined in the nominal new engine model (or are within a defined tolerance of the expected performance parameter values). If the measured performance parameter values are equal to or substantially equal to the expected performance parameter values (YES at step 1108), the methodology returns to step 1102, where steps 1102-1108 are repeated. Alternatively, if the measured performance parameter values are not equal to or substantially equal to the expected performance parameter values (NO at step 1108), the methodology proceeds to step 1110, where one or more performance modifier values are determined. The one or more performance modifier values are values that are determined to force the expected performance parameter values defined in the nominal new engine model to match or substantially match the measured performance parameter values obtained at step 1104. In an example scenario, the performance parameters being examined may be compressor efficiency and air flow. In this scenario, the performance modifier for the compressor efficiency may be an efficiency adder value that, when added to the expected compressor efficiency for the current engine operating conditions (e.g., the current core speed and pressure ratio), yields the compressor efficiency calculated at step 1106 based on the sensor data. The performance modifier for the compressor air flow may be a flow scalar value that, when multiplied by the expected air flow for the current engine operating conditions, yields the air flow calculated at step 1106 based on the sensor data.

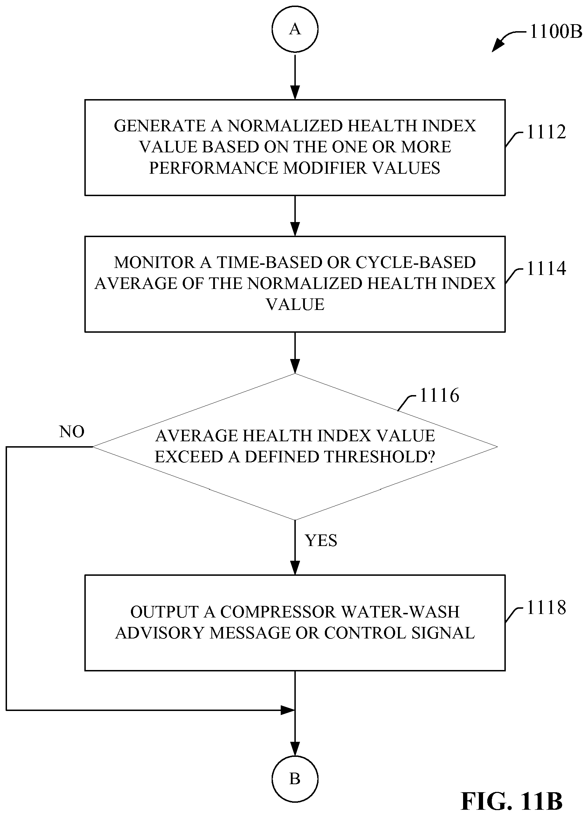

The methodology then proceeds to the second part 1100B illustrated in FIG. 11B. At 1112, a normalized health index value for the engine is generated based on the one or more performance modifier values determined at step 1110. In one or more example embodiments, the normalized health index value may be determined based on a root sum square of the one or more performance modifier values obtained at step 1110. However, other techniques for deriving the health index value based on a composite or aggregate the performance modifier values are also within the scope of one or more embodiments of this disclosure.

At 1114, a time-based or cycle-based average of the normalized health index value is monitored. In an example time-based averaging method, the normalized health index value generated at step 1112, which is updated over multiple cycles as new sensor data is received, can be averaged over a most recent defined time duration (e.g., a one-day average, a one week average, etc.). In an example cycle-based averaging method, the most recent *n* calculated values of the normalized health index can be averaged, where *n* is a defined number of computational cycles of the normalized health index value. This average normalized health index value can be monitored or trended over time.

At 1116, a determination is made as to whether the average health index value tracked at step 1114 is exceeds a defined threshold. The defined threshold can correspond to a value of the normalized health index value indicative of a level of dirt accumulation in the engine's compressor that merits a water-wash operation. If the average health index value does not exceed the defined threshold (NO at step 1116), the methodology returns to step 1102 in FIG. 11A, and steps 1102-1116 are repeated. The repetition of steps 1102-1116 - which can execute periodically, in response to defined conditions, or substantially continuously - causes the average health index value to update over the course of engine operation, with the accumulation of dirt or other contaminants in the compressor causing a gradual increase in the health index value indicative of gradually decreasing engine efficiency.

If the average health index value exceeds the defined threshold (YES at step 1116), the methodology proceeds to step 1118, where a compressor water-wash advisory message or control signal is output. In an example scenario, the water-wash advisory message can be included in a post-flight report generated by the system. Such a post-flight report can be downloaded by a user's client device, and may also include a graph that displays a trend of the value of the health index value (the normalized value as well as the average normalized value) over time. In the case of automatic on-line water-wash systems, a water wash control signal generated at step 1118 can initiate an on-line water-wash of the compressor during operation of the engine (e.g., during flight).

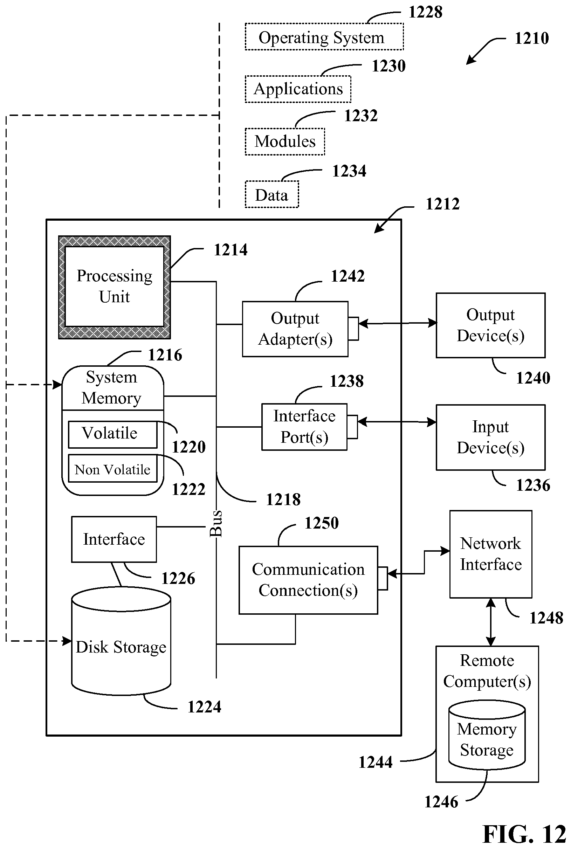

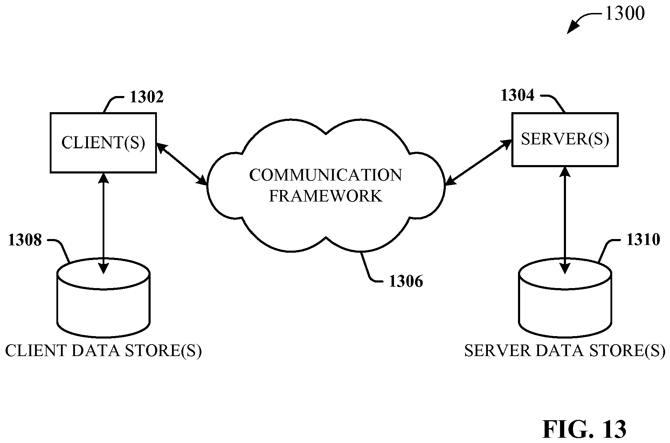

In order to provide a context for the various aspects of the disclosed subject matter, FIGs. 12 and 13 as well as the following discussion are intended to provide a brief, general description of a suitable environment in which the various aspects of the disclosed subject matter may be implemented.

With reference to FIG. 12, an example environment 1210 for implementing various aspects of the aforementioned subject matter includes a computer 1212. The computer 1212 includes a processing unit 1214, a system memory 1216, and a system bus 1218. The system bus 1218 couples system components including, but not limited to, the system memory 1216 to the processing unit 1214. The processing unit 1214 can be any of various available processors. Multi-core microprocessors and other multiprocessor architectures also can be employed as the processing unit 1214.

The system bus 1218 can be any of several types of bus structure(s) including the memory bus or memory controller, a peripheral bus or external bus, and/or a local bus using any variety of available bus architectures including, but not limited to, 8-bit bus, Industrial Standard Architecture (ISA), Micro-Channel Architecture (MSA), Extended ISA (EISA), Intelligent Drive Electronics (IDE), VESA Local Bus (VLB), Peripheral Component Interconnect (PCI), Universal Serial Bus (USB), Controller Area Network (CAN) bus, Aeronautical Radio INC. (ARINC) bus, Advanced Graphics Port (AGP), Personal Computer Memory Card International Association bus (PCMCIA), and Small Computer Systems Interface (SCSI).

The system memory 1216 includes volatile memory 1220 and nonvolatile memory 1222. The basic input/output system (BIOS), containing the basic routines to transfer information between elements within the computer 1212, such as during start-up, is stored in nonvolatile memory 1222. By way of illustration, and not limitation, nonvolatile memory 1222 can include read only memory (ROM), programmable ROM (PROM), electrically programmable ROM (EPROM), electrically erasable PROM (EEPROM), or flash memory. Volatile memory 1220 includes random access memory (RAM), which acts as external cache memory. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), and direct Rambus RAM (DRRAM).

Computer 1212 also includes removable/non-removable, volatile/non-volatile computer storage media. FIG. 12 illustrates, for example a disk storage 1224. Disk storage 1224 includes, but is not limited to, devices like a magnetic disk drive, floppy disk drive, tape drive, Jaz drive, Zip drive, LS-100 drive, flash memory card, or memory stick. In addition, disk storage 1224 can include storage media separately or in combination with other storage media including, but not limited to, an optical disk drive such as a compact disk ROM device (CD-ROM), CD recordable drive (CD-R Drive), CD rewritable drive (CD-RW Drive) or a digital versatile disk ROM drive (DVD-ROM). To facilitate connection of the disk storage 1224 to the system bus 1218, a removable or non-removable interface is typically used such as interface 1226.

It is to be appreciated that FIG. 12 describes software that acts as an intermediary between users and the basic computer resources described in suitable operating environment 1210. Such software includes an operating system 1228. Operating system 1228, which can be stored on disk storage 1224, acts to control and allocate resources of the computer 1212. System applications 1230 take advantage of the management of resources by operating system 1228 through program modules 1232 and program data 1234 stored either in system memory 1216 or on disk storage 1224. It is to be appreciated that one or more embodiments of the subject disclosure can be implemented with various operating systems or combinations of operating systems.

A user enters commands or information into the computer 1212 through input device(s) 1236. Input devices 1236 include, but are not limited to, a pointing device such as a mouse, trackball, stylus, touch pad, keyboard, microphone, joystick, game pad, satellite dish, scanner, TV tuner card, digital camera, digital video camera, web camera, and the like. These and other input devices connect to the processing unit 1214 through the system bus 1218 via interface port(s) 1238. Interface port(s) 1238 include, for example, a serial port, a parallel port, a game port, and a universal serial bus (USB). Output device(s) 1240 use some of the same type of ports as input device(s) 1236. Thus, for example, a USB port may be used to provide input to computer 1212, and to output information from computer 1212 to an output device 1240. Output adapters 1242 are provided to illustrate that there are some output devices 1240 like monitors, speakers, and printers, among other output devices 1240, which require special adapters. The output adapters 1242 include, by way of illustration and not limitation, video and sound cards that provide a means of connection between the output device 1240 and the system bus 1218. It should be noted that other devices and/or systems of devices provide both input and output capabilities such as remote computer(s) 1244.

Computer 1212 can operate in a networked environment using logical connections to one or more remote computers, such as remote computer(s) 1244. The remote computer(s) 1244 can be a personal computer, a server, a router, a network PC, a workstation, a microprocessor based appliance, a peer device or other common network node and the like, and typically includes many or all of the elements described relative to computer 1212. For purposes of brevity, only a memory storage device 1246 is illustrated with remote computer(s) 1244. Remote computer(s) 1244 is logically connected to computer 1212 through a network interface 1248 and then physically connected via communication connection 1250. Network interface 1248 encompasses communication networks such as local-area networks (LAN) and wide-area networks (WAN). LAN technologies include Fiber Distributed Data Interface (FDDI), Copper Distributed Data Interface (CDDI), Ethernet/IEEE 802.3, Token Ring/IEEE 802.5 and the like. WAN technologies include, but are not limited to, point-to-point links, circuit switching networks like Integrated Services Digital Networks (ISDN) and variations thereon, packet switching networks, and Digital Subscriber Lines (DSL).

Communication connection(s) 1250 refers to the hardware/software employed to connect the network interface 1248 to the system bus 1218. While communication connection 1250 is shown for illustrative clarity inside computer 1212, it can also be external to computer 1212. The hardware/software necessary for connection to the network interface 1248 includes, for exemplary purposes only, internal and external technologies such as, modems including regular telephone grade modems, cable modems and DSL modems, ISDN adapters, and Ethernet cards.

FIG. 13 is a schematic block diagram of a sample computing environment 1300 with which the disclosed subject matter can interact. The sample computing environment 1300 includes one or more client(s) 1302. The client(s) 1302 can be hardware and/or software (e.g., threads, processes, computing devices). The sample computing environment 1300 also includes one or more server(s) 1304. The server(s) 1304 can also be hardware and/or software (e.g., threads, processes, computing devices). The servers 1304 can house threads to perform transformations by employing one or more embodiments as described herein, for example. One possible communication between a client 1302 and servers 1304 can be in the form of a data packet adapted to be transmitted between two or more computer processes. The sample computing environment 1300 includes a communication framework 1306 that can be employed to facilitate communications between the client(s) 1302 and the server(s) 1304. The client(s) 1302 are operably connected to one or more client data store(s) 1308 that can be employed to store information local to the client(s) 1302. Similarly, the server(s) 1304 are operably connected to one or more server data store(s) 1310 that can be employed to store information local to the servers 1304.

The above description of illustrated embodiments of the subject disclosure, including what is described in the Abstract, is not intended to be exhaustive or to limit the disclosed embodiments to the precise forms disclosed. While specific embodiments and examples are described herein for illustrative purposes, various modifications are possible that are considered within the scope of such embodiments and examples, as those skilled in the relevant art can recognize.

In this regard, while the disclosed subject matter has been described in connection with various embodiments and corresponding figures, where applicable, it is to be understood that other similar embodiments can be used or modifications and additions can be made to the described embodiments for performing the same, similar, alternative, or substitute function of the disclosed subject matter without deviating therefrom. Therefore, the disclosed subject matter should not be limited to any single embodiment described herein, but rather should be construed in breadth and scope in accordance with the appended claims below.

In addition, the term "or" is intended to mean an inclusive "or" rather than an exclusive "or." That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. Moreover, articles "a" and "an" as used in the subject specification and annexed drawings should generally be construed to mean "one or more" unless specified otherwise or clear from context to be directed to a singular form.

What has been described above includes examples of systems and methods illustrative of the disclosed subject matter. It is, of course, not possible to describe every combination of components or methodologies here. One of ordinary skill in the art may recognize that many further combinations and permutations of the claimed subject matter are possible. Furthermore, to the extent that the terms "includes," "has," "possesses," and the like are used in the detailed description, claims, appendices and drawings such terms are intended to be inclusive in a manner similar to the term "comprising" as "comprising" is interpreted when employed as a transitional word in a claim.

**Claims**

1. A method (1100A, 1100B), comprising:

   receiving (1102), by a system comprising at least one processor, sensor data representing one or more measured engine parameters of a turbine engine;
   determining (1104), by the system, one or more engine performance parameter values based on the sensor data;
   generating (1112), by the system, a health index value based on a difference between the one or more engine performance parameter values and one or more expected engine performance parameter values defined in a nominal new engine model; and
   generating (1118), by the system, a compressor water-wash advisory output in response to a determination that the health index value satisfies a defined criterion;
   wherein the health index value comprises a normalized health index value, and the generating the water-wash advisory output comprises:

      monitoring an average of the normalized health index value over a time duration or across flight cycles; and
      generating the water-wash advisory output in response to a determination that the average of the normalized health index value exceeds a defined threshold value.

2. The method (1100A, 1100B) of claim 1, wherein the generating (1112) the health index value comprises:

   generating, based on the difference between the one or more engine performance parameter values and the one or more expected engine performance parameter values, one or more performance parameter modifier values that cause the one or more expected engine performance parameter values to match or substantially match the one or more engine performance parameter values; and
   generating the health index value as a function of the one or more performance parameter modifier values.

3. The method (1100A, 1100B) of claim 2, further comprising:

   generating, by the system, the nominal new engine model to define the one or more expected engine performance parameter values for ranges of values of the one or more measured engine parameters; and
   generating, by the system, an actual engine model that defines the one or more expected engine performance parameter values modified by the one or more performance parameter modifier values.

4. The method (1100A, 1100B) of any preceding claim, wherein the generating the water-wash advisory output comprises at least one of generating report data that includes a water-wash advisory message or initiating an on-wing water-wash sequence.

5. The method (1100A, 1 100B) of any preceding claim, wherein the receiving the sensor data representing the one or more measured engine parameter values comprises receiving sensor data representing at least one of a compressor inlet temperature, a compressor exit temperature, a compressor inlet pressure, a compressor exit pressure, a core speed, a fan speed, an exhaust gas temperature, an inter-turbine temperature, or a fuel flow.

6. The method (1100A, 1100B) of any preceding claim, wherein the determining the one or more engine performance parameter values comprises determining at least one of a compressor efficiency or a compressor air flow.

7. A system (302) for generating engine compressor water-wash notifications, comprising:

a memory (320) that stores executable components;
a processor (318), operatively coupled to the memory, that executes the executable components, the executable components comprising:

a sensor data component (304) configured to receive sensor data representing one or more engine parameter values measured from a gas turbine engine;
a tracking filter component (308) configured to determine one or more engine performance parameter values based on the one or more engine parameter values, and to determine a difference between the one or more engine performance parameter values and corresponding one or more expected engine performance parameter values defined in a nominal new engine model; and
a health index analysis component (306) configured to generate a health index value based on the difference between the one or more engine performance parameter values and the one or more expected engine performance parameter values, and to output a compressor water-wash advisory indication in response to a determination that the health index value satisfies a defined criterion;

wherein the health index analysis component is further configured to:

normalize the health index value to yield a normalized health index value,
monitor an average of the normalized health index value over a time duration or across flight cycles to yield an averaged health index value, and
generate the water-wash advisory in response to a determination that the averaged health index value exceeds a defined threshold value.

8. The system (302) of claim 7, wherein the health index analysis component is configured to:

based on the difference between the one or more engine performance parameter values and the one or more expected engine performance parameter values, generate one or more performance parameter modifier values that cause the one or more expected engine performance parameter values to match or substantially match the one or more engine performance parameter values, and
generate the health index value as a function of the one or more performance parameter values.

9. The system (302) of claim 8, wherein
the nominal new engine model defines the one or more expected engine performance parameter values for ranges of values of one or more measured engine parameters, and
the tracking filter component is further configured to generate an actual engine model based on the one or more expected engine performance parameter values as modified by the one or more performance parameter modifier values.

10. The system (302) of any of claims 7 to 9, wherein the health index analysis component is further configured to generate report data that includes the compressor water-wash advisory indication.

11. The system (302) of any of claims 7 to 10, further comprising an on-line water-wash control component configured to send a control signal to an on-line water-wash control system of an aircraft in response to the compressor water-wash advisory indication.

12. The system (302) of any of claims 7 to 11, wherein the one or more engine parameter values comprise values of at least one of a compressor inlet temperature, a compressor exit temperature, a compressor inlet pressure, a compressor exit pressure, a core speed, a fan speed, an exhaust gas temperature, an inter-turbine temperature, or a fuel flow.

13. The system (302) of any of claims 7 to 12, wherein the one or more engine performance parameter values comprise values of at least one of a compressor efficiency or a compressor air flow.


**Patentansprüche**

1. Verfahren (1100A, 1100B), umfassend:

Empfangen (1102) von Sensordaten, die einen oder mehrere gemessene Triebwerkparameter eines Turbinentriebwerks darstellen, durch ein System, das mindestens einen Prozessor umfasst;
Bestimmen (1104) eines oder mehrerer Triebwerkleistungsparameterwerte auf Basis der Sensordaten durch das System;
Erzeugen (1112) eines Gesundheitsindexwerts auf Basis einer Differenz zwischen dem einen oder den mehreren Triebwerkleistungsparameterwerten und einem oder mehreren erwarteten Triebwerkleistungsparameterwerten, die in einem nominalen neuen Triebwerkmodell definiert sind, durch das System; und
Erzeugen (1118) einer Kompressorwasserwaschempfehlungsausgabe als Reaktion auf eine Bestimmung, dass der Gesundheitsindexwert ein definiertes Kriterium erfüllt, durch das System;
wobei der Gesundheitsindexwert einen normalisierten Gesundheitsindexwert umfasst und das Erzeugen der Wasserwaschempfehlungsausgabe umfasst:

Überwachen eines Durchschnitts des normalisierten Gesundheitsindexwerts über eine Zeitdauer oder über Flugzyklen hinweg; und
Erzeugen der Wasserwaschempfehlungsausgabe als Reaktion auf eine Bestimmung, dass der Durchschnitt des normalisierten Gesundheitsindexwerts einen definierten Schwellenwert überschreitet.

2. Verfahren (1100A, 1100B) nach Anspruch 1, wobei das Erzeugen (1112) des Gesundheitsindexwerts umfasst:

Erzeugen eines oder mehrerer Leistungsparameter-Modifikatorwerte, die bewirken, dass der eine oder die mehreren erwarteten Triebwerkleistungsparameterwerte mit dem einen oder den mehreren Triebwerkleistungsparameterwerten übereinstimmen oder im Wesentlichen übereinstimmen, basierend auf der Differenz zwischen dem einen oder den mehreren Triebwerkleistungsparameterwerten und dem einen oder den mehreren erwarteten Triebwerkleistungsparameterwerten; und
Erzeugen des Gesundheitsindexwerts als Funktion des einen oder der mehreren Leistungsparameter-Modifikatorwerte.

3. Verfahren (1100A, 1100B) nach Anspruch 2, ferner umfassend:

Erzeugen des nominalen neuen Triebwerkmodells durch das System zum Definieren des einen oder der mehreren erwarteten Triebwerkleistungsparameterwerte für Wertebereiche des einen oder der mehreren gemessenen Triebwerkparameter; und
Erzeugen eines aktuellen Triebwerkmodells durch das System, das den einen oder die mehreren erwarteten Triebwerkleistungsparameterwerte definiert, die durch den einen oder die mehreren Leistungsparameter-Modifikatorwerte geändert wurden.

4. Verfahren (1100A, 1100B) nach einem der vorhergehenden Ansprüche, wobei das Erzeugen der Wasserwaschempfehlungsausgabe mindestens eines von Erzeugen von Berichtsdaten, die eine Wasserwaschempfehlungsnachricht enthalten oder Auslösen einer On-Wing-Wasserwaschsequenz umfasst.

5. Verfahren (1100A, 1100B) nach einem der vorhergehenden Ansprüche, wobei das Empfangen der Sensordaten, die den einen oder die mehreren gemessenen Triebwerkparameterwerte darstellen, das Empfangen von Sensordaten umfasst, die mindestens eines von einer Kompressoreinlasstemperatur, einer Kompressorauslasstemperatur, einem Kompressoreinlassdruck, einem Kompressorauslassdruck, einer Kerndrehzahl, einer Gebläsedrehzahl, einer Abgastemperatur, einer Temperatur zwischen den Turbinen oder einem Kraftstoffstrom darstellen.

6. Verfahren (1100A, 1100B) nach einem der vorhergehenden Ansprüche, wobei das Bestimmen des einen oder der mehreren Triebwerkleistungsparameterwerte das Bestimmen mindestens eines von einem Kompressorwirkungsgrad oder einem Kompressorluftstrom umfasst.

7. System (302) zum Erzeugen von Triebwerkskompressorwasserwaschbenachrichtigungen, umfassend:

einen Speicher (320), der ausführbare Komponenten speichert;
einen Prozessor (318), der betriebsmäßig mit dem Speicher verbunden ist und die ausführbaren Komponenten ausführt, wobei die ausführbaren Komponenten umfassen:

eine Sensordatenkomponente (304), die dazu konfiguriert ist, Sensordaten zu empfangen, die einen oder mehrere Triebwerkparameterwerte darstellen, die von einem Gasturbinentriebwerk gemessen werden;
eine Nachlauffilterkomponente (308), die dazu konfiguriert ist, einen oder mehrere Triebwerkleistungsparameterwerte basierend auf dem einen oder den mehreren Triebwerkparameterwerten zu bestimmen und eine Differenz zwischen dem einen oder den mehreren Triebwerkleistungsparameterwerten und dem entsprechenden einen oder den mehreren erwarteten Triebwerkleistungsparametern zu bestimmen, die in einem nominalen neuen Triebwerkmodell definiert sind; und
eine Gesundheitsindexanalysekomponente (306), die dazu konfiguriert ist, einen Gesundheitsindexwert basierend auf der Differenz zwischen dem einen oder den mehreren Triebwerkleistungsparameterwerten und dem einen oder den mehreren erwarteten Triebwerkleistungsparameterwerten zu erzeugen und als Reaktion auf eine Bestimmung, dass der Gesundheitsindexwert ein definiertes Kriterium erfüllt, einen Kompressorwasserwaschempfehlungshinweis auszugeben;
wobei die Gesundheitsindexanalysekomponente ferner dazu konfiguriert ist:
den Gesundheitsindexwert zu normalisieren, um einen normalisierten Gesundheitsindexwert zu ergeben, einen Durchschnitt des normalisierten Gesundheitsindexwerts über eine Zeitdauer oder über Flugzyklen hinweg zu überwachen, um einen gemittelten Gesundheitsindexwert zu ergeben, und die Wasserwaschempfehlung als Reaktion auf eine Bestimmung, dass der gemittelte Gesundheitsindexwert einen definierten Schwellenwert überschreitet, zu erzeugen.

8. System (302) nach Anspruch 7, wobei die Gesundheitsindexanalysekomponente dazu konfiguriert ist:
basierend auf der Differenz zwischen dem einen oder den mehreren Triebwerkleistungsparameterwerten und dem einen oder den mehreren erwarteten Triebwerkleistungsparameterwerten einen oder mehrere Leistungsparameter-Modifikatorwerte zu erzeugen, die bewirken, dass der eine oder die mehreren erwarteten Triebwerksleistungsparameterwerte mit dem einen oder den mehreren Triebwerksleistungsparameterwerten übereinstimmen oder im Wesentlichen übereinstimmen, und den Gesundheitsindexwert als Funktion des einen oder der mehreren Leistungsparameterwerte zu erzeugen.

9. System (302) nach Anspruch 8, wobei das nominale neue Triebwerkmodell den einen oder die mehreren erwarteten Triebwerkleistungsparameterwerte für Wertebereiche eines oder mehrerer gemessener Triebwerkparameter definiert und die Nachlauffilterkomponente ferner dazu konfiguriert ist, ein aktuelles Triebwerkmodell basierend auf dem einen oder den mehreren erwarteten Triebwerkleistungsparameterwerten zu erzeugen, wie sie durch den einen oder die mehreren Leistungsparameter-Modifikatorwerte geändert wurden.

10. System (302) nach einem der Ansprüche 7 bis 9, wobei die Gesundheitsindexanalysekomponente ferner dazu konfiguriert ist, Berichtsdaten zu erzeugen, die den Kompressorwasserwaschempfehlungshinweis enthalten.

11. System (302) nach einem der Ansprüche 7 bis 10, ferner umfassend eine Online-Wasserwaschsteuerungskomponente, die dazu konfiguriert ist, ein Steuersignal an ein Online-Wasserwaschsteuerungssystem eines Flugzeugs als Reaktion auf den Kompressorwasserwaschempfehlungshinweis zu senden.

12. System (302) nach einem der Ansprüche 7 bis 11, wobei der eine oder die mehreren Triebwerkparameterwerte Werte von mindestens einem von einer Kompressoreinlasstemperatur, einer Kompressorauslasstemperatur, einem Kompressoreinlassdruck, einem Kompressorauslassdruck, einer Kerndrehzahl, einer Gebläsedrehzahl, einer Abgastemperatur, einer Temperatur zwischen den Turbinen oder einem Kraftstoffstrom umfassen.

**13.** System (302) nach einem der Ansprüche 7 bis 12, wobei der eine oder die mehreren Triebwerkleistungsparameterwerte Werte von mindestens einem von einem Kompressorwirkungsgrad oder einem Kompressorluftstrom umfassen.

**Revendications**

**1.** Procédé (1100A, 1100B), comprenant :

la réception (1102), par un système comprenant au moins un processeur, des données de capteur représentant un ou plusieurs paramètres de moteur mesurés d'une turbomachine ;
la détermination (1104), par le système, d'une ou de plusieurs valeurs de paramètres de performances du moteur sur la base des données de capteur ;
la génération (1112), par le système, d'une valeur d'indice d'état basée sur une différence entre la ou les valeurs de paramètres de performances de moteur et une ou plusieurs valeurs de paramètres de performances de moteur attendues définies dans un nouveau modèle de moteur nominal ; et
la génération (1118), par le système, d'une sortie d'avis de lavage à l'eau du compresseur en réponse à une détermination selon laquelle la valeur d'indice d'état satisfait un critère défini ;
la valeur d'indice d'état comprenant une valeur d'indice d'état normalisée, et la génération de la sortie d'avis de lavage à l'eau comprenant :

la surveillance d'une moyenne de la valeur d'indice d'état normalisé sur une durée ou sur des cycles de vol ; et
la génération de la sortie d'avis de lavage à l'eau en réponse à une détermination selon laquelle la moyenne de la valeur d'indice d'état normalisé dépasse une valeur de seuil définie.

**2.** Procédé (1100A, 1100B) selon la revendication 1, dans lequel la génération (1112) de la valeur d'indice d'état comprend :

la génération, sur la base de la différence entre la ou les valeurs de paramètres de performances du moteur et la ou les valeurs de paramètres de performances de moteur attendues, d'une ou de plusieurs valeurs de modificateur de paramètres de performances qui amènent la ou les valeurs de paramètres de performances de moteur attendues à correspondre ou à correspondre sensiblement à la ou aux valeurs de paramètres de performances du moteur ; et
la génération de la valeur d'indice d'état en fonction de la ou des valeurs de modificateur de paramètre de performance.

**3.** Procédé (1100A, 1100B) selon la revendication 2, comprenant en outre :

la génération, par le système, du nouveau modèle de moteur nominal pour définir la ou les valeurs de paramètres de performances de moteur attendues pour des plages de valeurs du ou des paramètres de moteur mesurés ; et
la génération, par le système, d'un modèle de moteur réel qui définit la ou les valeurs de paramètres de performances de moteur attendues modifiées par la ou les valeurs de modificateur de paramètres de performances.

**4.** Procédé (1100A, 1100B) selon une quelconque revendication précédente, dans lequel la génération de la sortie d'avis de lavage à l'eau comprend au moins l'un de la génération de données de rapport qui incluent un message d'avis de lavage à l'eau ou du lancement d'une séquence de lavage à l'eau sur l'aile.

**5.** Procédé (1100A, 1100B) selon une quelconque revendication précédente, dans lequel la réception des données de capteur représentant la ou les valeurs de paramètres de moteur mesurées comprend la réception de données de capteur représentant au moins l'un d'une température d'entrée de compresseur, d'une température de sortie de compresseur, d'une pression d'entrée de compresseur, d'une pression de sortie du compresseur, d'une vitesse de base, d'une vitesse de soufflante, d'une température de gaz d'échappement, d'une température inter-turbine ou d'un débit de carburant.

**6.** Procédé (1100A, 1100B) selon une quelconque revendication précédente, dans lequel la détermination de la ou des valeurs de paramètres de performances du moteur comprend la détermination d'au moins un d'un rendement de compresseur ou d'un débit d'air de compresseur.

**7.** Système (302) permettant de générer des notifications de lavage à l'eau de compresseur de moteur, comprenant :

une mémoire (320) qui stocke des composants exécutables ;
un processeur (318), couplé de manière fonctionnelle à la mémoire, qui exécute les composants exécutables, les composants exécutables comprenant :

un composant de données de capteur (304) conçu pour recevoir des données de capteur représentant une ou plusieurs valeurs de paramètres de moteur mesurées à partir d'un moteur à turbine à gaz ;
un composant de filtre de suivi (308) conçu pour déterminer une ou plusieurs valeurs de paramètres de performances du moteur sur la base de la ou des valeurs de paramètres de moteur, et pour déterminer une différence entre la ou les valeurs de paramètres de performances de moteur et une ou plusieurs valeurs de paramètres de performances de moteur attendues correspondantes définies dans un nouveau modèle de moteur nominal ; et
un composant d'analyse d'indice d'état (306) conçu pour générer une valeur d'indice d'état sur la base de la différence entre la ou les valeurs de paramètres de performances du moteur et la ou les valeurs de paramètres de performances de moteur attendues, et pour émettre une indication d'avis de lavage à l'eau du compresseur en réponse à une détermination selon laquelle la valeur de l'indice d'état satisfait à un critère défini ;
le composant d'analyse d'indice d'état étant en outre conçu pour :

normaliser la valeur de l'indice d'état de manière à produire une valeur d'indice d'état normalisée,
surveiller une moyenne de la valeur d'indice d'état normalisée sur une durée ou sur plusieurs cycles de vol afin de produire une valeur d'indice d'état moyenne et
générer l'avis de lavage à l'eau en réponse à une détermination selon laquelle la valeur d'indice d'état moyenne dépasse une valeur seuil définie.

**8.** Système (302) selon la revendication 7, dans lequel le composant d'analyse d'indice d'état est conçu pour :

générer, sur la base de la différence entre la ou les valeurs de paramètres de performances du moteur et la ou les valeurs de paramètres de performances de moteur attendues, une ou plusieurs valeurs de modificateur de paramètres de performances qui amènent la ou les valeurs de paramètres de performances de moteur attendues à correspondre ou à correspondre sensiblement à la ou aux valeurs de paramètres de performances du moteur, et
générer la valeur d'indice d'état en fonction de la ou des valeurs de paramètres de performances.

**9.** Système (302) selon la revendication 8, dans lequel
le nouveau modèle de moteur nominal définit la ou les valeurs de paramètres de performances de moteur attendues pour des plages de valeurs d'un ou de plusieurs paramètres de moteur mesurés, et
le composant de filtre de suivi est en outre conçu pour générer un modèle de moteur réel basé sur la ou les valeurs de paramètres de performances de moteur attendues modifiées par la ou les valeurs de modificateur de paramètres de performances.

**10.** Système (302) selon l'une quelconque des revendications 7 à 9, dans lequel le composant d'analyse d'indice d'état est en outre conçu pour générer des données de rapport qui incluent l'indication d'avis de lavage à l'eau du compresseur.

**11.** Système (302) selon l'une quelconque des revendications 7 à 10, comprenant en outre un composant de commande de lavage à l'eau en ligne conçu pour envoyer un signal de commande à un système de commande de lavage à l'eau en ligne d'un aéronef en réponse à l'indication d'avis de lavage à l'eau du compresseur.

**12.** Système (302) selon l'une quelconque des revendications 7 à 11, dans lequel la ou les valeurs de paramètres du moteur comprennent des valeurs d'au moins un d'une température d'entrée de compresseur, d'une température de sortie de compresseur, d'une pression d'entrée de compresseur, d'une pression de sortie de compresseur, d'une vitesse de base, d'une vitesse de soufflante, d'une température de gaz d'échappement, d'une température inter-turbine ou d'un débit de carburant.

**13.** Système (302) selon l'une quelconque des revendications 7 à 12, dans lequel la ou les valeurs de paramètres de performances du moteur comprennent des valeurs d'au moins un d'un rendement de compresseur ou d'un débit d'air de compresseur.

COMPRESSOR

COMBUSTION
CHAMBER

NOZZLE

FIG. 1

EP 3 392 469 B1

WATER-WASH
SYSTEM

COMPRESSOR

COMBUSTION
CHAMBER

NOZZLE

FIG. 2

EP 3 392 469 B1

**WATER-WASH ADVISORY SYSTEM** — 302

304 — SENSOR DATA COMPONENT

310 — ON-LINE WATER-WASH CONTROL COMPONENT

306 — HEALTH INDEX ANALYSIS COMPONENT

318 — PROCESSOR(S)

308 — TRACKING FILTER COMPONENT

320 — MEMORY

322 — MODEL DATA

**FIG. 3**

EP 3 392 469 B1

INLET
TEMPERATURE AND/OR PRESSURE DATA

404

INLET
SENSORS

OUTLET
TEMPERATURE AND/OR PRESSURE DATA

406

OUTLET
SENSORS

304

SENSOR DATA
COMPONENT

402

SENSOR DATA

112

114

TO
TRACKING FILTER COMPONENT

FIG. 4

EP 3 392 469 B1

SENSOR DATA
FROM ENGINE
SENSORS

TRACKING FILTER COMPONENT 308

510 Modeled Efficiencies

Efficiency Modifiers 506

Modeled Flows 512

Flow Modifiers 508

SENSOR DATA 402

SENSOR DATA COMPONENT 304

INLET PRESSURE/ TEMPERATURE

OUTLET PRESSURE/ TEMPERATURE

CORE SPEED

NOMINAL NEW ENGINE MODEL 502

ACTUAL ENGINE MODEL 504

HEALTH INDEX ANALYSIS COMPONENT 306

WATER-WASH NOTIFICATIONS 514

FIG. 5

EP 3 392 469 B1

502

| NOMINAL NEW ENGINE MODEL | | |
|---|---|---|
| COMPRESSOR PRESSURE RATIO (CPR) | | |
| | 10.2 | 10.4 |
| 9.50 | [Efficiency(9.50, 10.2)]<br>[Flow(9.50, 10.2)] | [Efficiency(9.50, 10.4)]<br>[Flow(9.50, 10.4)] |
| 9.60 | [Efficiency(9.60, 10.2)]<br>[Flow(9.60, 10.2)] | [Efficiency(9.60, 10.4)]<br>[Flow(9.60, 10.4)] |
| 9.70 | [Efficiency(9.70, 10.2)]<br>[Flow(9.70, 10.2)] | [Efficiency(9.70, 10.4)]<br>[Flow(9.70, 10.4)] |

CORE SPEED (x1000 RPM)

· · ·

504

| ACTUAL ENGINE MODEL | | |
|---|---|---|
| COMPRESSOR PRESSURE RATIO (CPR) | | |
| | 10.2 | 10.4 |
| 9.50 | [Efficiency(9.50, 10.2)] + **[Efficiency Adder]**<br>[Flow(9.50, 10.2)] x **[Flow Scalar]** | [Efficiency(9.50, 10.4)] + **[Efficiency Adder]**<br>[Flow(9.50, 10.4)] x **[Flow Scalar]** |
| 9.60 | [Efficiency(9.60, 10.2)] + **[Efficiency Adder]**<br>[Flow(9.60, 10.2)] x **[Flow Scalar]** | [Efficiency(9.60, 10.4)] + **[Efficiency Adder]**<br>[Flow(9.60, 10.4)] x **[Flow Scalar]** |
| 9.70 | [Efficiency(9.70, 10.2)] + **[Efficiency Adder]**<br>[Flow(9.70, 10.2)] x **[Flow Scalar]** | [Efficiency(9.70, 10.4)] + **[Efficiency Adder]**<br>[Flow(9.70, 10.4)] x **[Flow Scalar]** |

CORE SPEED (x1000 RPM)

· · ·

**FIG. 6**

*402*

SENSOR DATA

SPEED

OUTLET PRESSURE/
TEMPERATURE

INLET PRESSURE/
TEMPERATURE

*308*

*702* EFFICIENCY CALCULATION
BLOCK

*708* CALCULATED
EFFICIENCY AND
FLOW

*710* COMPARISON
BLOCK

TRACKING FILTER
COMPONENT

*510* MODELED
EFFICIENCY

*506* EFFICIENCY
MODIFIERS

*512* MODELED
FLOW

*508* FLOW
MODIFIERS

*502* NOMINAL NEW
ENGINE MODEL

*504* ACTUAL
ENGINE MODEL

**FIG. 7**

FROM TRACKING FILTER COMPONENT

EFFFICIENCY ADDER ⟋802

FLOW SCALAR ⟋804

306

HEALTH INDEX CALCULATION BLOCK ⟋806

NORMALIZED HEALTH INDEX ⟋812

AVERAGING BLOCK ⟋808

AVERAGED HEALTH INDEX ⟋814

HEALTH INDEX THRESHOLD ⟋818

COMPARE BLOCK ⟋810

HEALTH INDEX ANALYSIS COMPONENT

WATER-WASH NOTIFICATION ⟋514

FIG. 8

FIG. 9

**Compressor Efficiency Adder – Takeoff/Ground, High Power**

**Compressor Health Index – Takeoff/Ground, High Power**

**FIG. 10**

EP 3 392 469 B1

START

1100A

B

RECEIVE SENSOR DATA REPRESENTING ONE OR MORE MEASURED ENGINE PARAMETERS OF A GAS TURBINE OR TURBOFAN ENGINE — 1102

DETERMINE ONE OR MORE ENGINE PERFORMANCE PARAMETER VALUES BASED ON THE SENSOR DATA — 1104

COMPARE THE ONE OR MORE ENGINE PERFORMANCE PARAMETER VALUES WITH CORRESPONDING ONE OR MORE EXPECTED PERFORMANCE PARAMETER VALUES DEFINED IN A NOMINAL NEW ENGINE MODEL — 1106

1108

MEASURED PERFORMANCE PARAMETER VALUES = EXPECTED PERFORMANCE PARAMETER VALUES?

YES

NO

DETERMINE ONE OR MORE PERFORMANCE MODIFIER VALUES THAT FORCE THE EXPECTED PERFORMANCE PARAMETER VALUES TO MATCH OR SUBSTANTIALLY MATCH THE MEASURED PERFORMANCE PARAMETER VALUES — 1110

A

**FIG. 11A**

A

1100B

GENERATE A NORMALIZED HEALTH INDEX
VALUE BASED ON THE ONE OR MORE
PERFORMANCE MODIFIER VALUES

1112

MONITOR A TIME-BASED OR CYCLE-BASED
AVERAGE OF THE NORMALIZED HEALTH INDEX
VALUE

1114

1116

AVERAGE HEALTH INDEX VALUE
EXCEED A DEFINED THRESHOLD?

NO

YES

OUTPUT A COMPRESSOR WATER-WASH
ADVISORY MESSAGE OR CONTROL SIGNAL

1118

B

**FIG. 11B**

1228

Operating System

1210

1230

Applications

1232

Modules

1234

Data

1212

1214

Processing
Unit

1242

Output
Adapter(s)

Output
Device(s)

1240

1216

System
Memory

Volatile

1220

Non Volatile

1222

1238

Interface
Port(s)

Input
Device(s)

1236

1218

Bus

Interface

1226

Disk Storage

1224

1250

Communication
Connection(s)

Network
Interface

1248

1244

Remote
Computer(s)

Memory
Storage

1246

**FIG. 12**

FIG. 13

**EP 3 392 469 B1**

**REFERENCES CITED IN THE DESCRIPTION**

**Patent documents cited in the description**

- EP 3051075 A1
- EP 3029275 A1
- EP 2149832 A2